# EUROPÄISCHE PATENTANMELDUNG

(11) **EP 3 299 646 A1**
(43) Veröffentlichungstag der Anmeldung: **28.03.2018**
(21) Anmeldenummer: 17192269.3
(22) Anmeldetag: 21.09.2017
(51) Int. Cl.: F16C 23/04, F16C 11/08, F16C 43/02

(54) **BUCHSE UND FAHRZEUGSITZ**

(30) Priorität: 21.09.2016 DE 102016218081
(71) Anmelder: Adient Luxembourg Holding S.à r.l., 1855 Luxembourg (LU)
(72) Erfinder: Pluta, Wolfgang, 67699 Heiligenmoschel (DE); Dick, Eric, 67697 Otterberg (DE); Krisch, Christina, 67659 Kaiserslautern (DE); Christoffel, Thomas, 66909 Herschweiler-Pettersheim (DE)
(74) Vertreter: Liedtke, Markus

(57) **Zusammenfassung**

Die Erfindung betrifft eine Buchse (1) umfassend eine langlochförmige Außenkontur, eine hülsenförmige Innenkontur und Mittel für einen Toleranzausgleich zwischen der hülsenförmigen Innenkontur und der langlochförmigen Außenkontur in einer Richtung quer zur Buchsenachse.

## Beschreibung

Die Erfindung betrifft eine Buchse und einen Fahrzeugsitz.

Aus dem Stand der Technik sind verschiedene Buchsen bekannt, beispielsweise für einen Verstellmechanismus eines Fahrzeugsitzes. Darüber hinaus sind im Stand der Technik Fahrzeugsitze bekannt, die eine Anzahl von Buchsen zur Führung eines Bestandteils eines Verstellmechanismus aufweisen.

Aus DE 197 31 305 A1 ist ein Gelenk einer Sitzhöhenverstellung eines Fahrzeugsitzes bekannt, das eine Buchse mit einem darin gelagerten Drehbolzen umfasst.

Aus DE 10 2008 025 266 A1 ist eine Lageranordnung für eine Verstellvorrichtung eines Fahrzeugsitzes bekannt.

Aus DE 10 2009 012 958 A1 ist eine Schwenkgelenkanordnung für einen Fahrzeugsitz bekannt.

Aufgabe der vorliegenden Erfindung ist es, eine verbesserte Buchse, insbesondere für einen Verstellmechanismus eines Fahrzeugsitzes, anzugeben. Aufgabe der vorliegenden Erfindung ist außerdem, einen verbesserten Fahrzeugsitz anzugeben.

Die Aufgabe wird die Buchse betreffend mit einer Buchse mit den in Anspruch 1 angegebenen Merkmalen gelöst. Den Fahrzeugsitz betreffend wird die Aufgabe mit einem Fahrzeugsitz mit den in Anspruch 15 angegebenen Merkmalen gelöst.

Eine Buchse umfasst erfindungsgemäß eine langlochförmige Außenkontur, eine hülsenförmige Innenkontur und Mittel für einen Toleranzausgleich zwischen der hülsenförmigen Innenkontur und der langlochförmigen Außenkontur in einer Richtung quer zur Buchsenachse, also in Richtung der Längsersteckung des Langlochs.

Die mit der erfindungsgemäßen Buchse erzielten Vorteile bestehen insbesondere darin, dass die Buchse auf einfache Weise einen Toleranzausgleich in einer Richtung quer zur Buchsenachse ermöglicht. Eine Führung eines Bauteils in der Buchse ist dadurch auf einfache Weise sehr leichtgängig und/oder sehr geräuscharm ermöglicht. Die Buchse ist zudem einfach herstellbar und einfach montierbar und damit besonders kostengünstig.

Gemäß einer Ausgestaltung ist die Buchse zum Führen eines Verstellmechanismus eines Fahrzeugsitzes ausgebildet. Eine Führung eines Elementes, welches Bestandteil eines Verstellmechanismus eines Fahrzeugsitzes ist, ist dadurch auf einfache Weise sehr leichtgängig und/oder sehr geräuscharm ermöglicht. Der Verstellmechanismus des Fahrzeugsitzes kann beispielsweise zu einer Höheneinstellung oder zu einer Neigungsverstellung dienen.

Gemäß einer ersten Alternative ist die Buchse zweiteilig und umfasst eine Führungsbuchse und eine Lagerbuchse. Eine derartige Buchse erlaubt einen Ausgleich einer besonders großen Toleranz und ist besonders einfach herstellbar und montierbar.

Eine Ausgestaltung der zweiteiligen Buchse sieht vor, dass die Führungsbuchse an einer Innenseite eine Nut aufweist und dass die Lagerbuchse einen Grundkörper und einen Kragen umfasst, welcher in der Nut führbar ist. Der Grundkörper ist bevorzugt hohlzylinderförmig, also hülsenförmig. Die Führungsbuchse ist also auch innenseitig langlochförmig und weist innenseitig eine umlaufende Nut auf, deren Nutbreite mit der Breite des Kragens korrespondiert. Dadurch ist die Lagerbuchse auf besonders einfache Weise und besonders passgenau für den Toleranzausgleich in der Führungsbuchse führbar.

Bevorzugt ist dabei die Nut umlaufend an der Innenseite angeordnet. Dadurch ist die Lagerbuchse besonders einfach und besonders sicher in der Führungsbuchse führbar.

Eine weitere Ausgestaltung der zweiteiligen Buchse sieht vor, dass die Führungsbuchse einen Buchsenkragen aufweist. Dadurch ist die Führungsbuchse besonders einfach in eine Aussparung einer Tragstruktur eines Fahrzeugsitzes einsetzbar und in einer Richtung gegen ein Herausfallen gesichert, wobei Form und Größe der Aussparung mit der äußeren Form und Größe der Führungsbuchse korrespondiert.

Eine weitere Ausgestaltung der zweiteiligen Buchse sieht vor, dass das geringste Innenmaß des Langlochs der Führungsbuchse, also die Langlochbreite, mit dem Außendurchmesser des bevorzugt hohlzylinderförmigen Grundkörpers der Lagerbuchse korrespondiert. Dadurch ist die Lagerbuchse genau und geräuscharm in der Führungsbuchse führbar. Beim Gebrauch der Buchse ist eine ungewollte Geräuschentwicklung damit reduzierbar oder vermeidbar.

Eine andere Ausgestaltung der zweiteiligen Buchse sieht vor, dass der Kragen der Lagerbuchse an zwei gegenüberliegenden Stellen kreisabschnittförmig unterbrochen ist. Damit weist der Kragen der Lagerbuchse zwei Abschnitte auf, die bevorzugt symmetrisch sind. Dadurch ist die Lagerbuchse in einer bestimmten Stellung, bevorzugt in genau einer Drehposition, in die Führungsbuchse einsteckbar. Nach dem Einstecken der Lagerbuchse in die Führungsbuchse kann die Lagerbuchse gedreht werden, wodurch ihr Kragen in die Nut der Führungsbuchse eingreift, so dass anschließend die Lagerbuchse zwar zum Toleranzausgleich in der Führungsbuchse quer zur Buchsenachse verschiebbar ist, aber in Richtung der Buchsenachse fixiert ist und also in dieser Richtung nicht herausfallen kann.

Eine andere Ausgestaltung der zweiteiligen Buchse sieht vor, dass die Führungsbuchse und/oder die Lagerbuchse aus Kunststoff gebildet sind. Die Buchse ist dadurch besonders leichtgewichtig und einfach und kostengünstig herstellbar.

Gemäß einer zweiten Alternative ist die Buchse einteilig, insbesondere einstückig. Dadurch ist die Buchse besonders einfach montierbar, wobei ein Zusammenbau derselben zuvor nicht erforderlich ist.

Eine Ausgestaltung der einteiligen Buchse sieht vor, dass die Buchse aus Kautschuk gebildet ist. Eine derartige Buchse ist besonders einfach und billig und zudem besonders geräuscharm, da ein Klappern zwischen verschiedenen Bauteilen der Buchse ausgeschlossen ist.

Eine weitere Ausgestaltung der einteiligen Buchse sieht einen Innenring und einen Außenring vor, wobei Innenring und Außenring durch Stege verbunden sind. Vorzugsweise sind vier Stege vorgesehen. Ein vergleichsweise großer Toleranzausgleich ist dadurch besonders einfach möglich; der Toleranzausgleich erfolgt im Wesentlichen durch Deformation der Stege.

Eine andere Ausgestaltung der einteiligen Buchse sieht vor, dass der Innenring hülsenförmig ist und die hülsenförmige Innenkontur bildet. Die Hülse ist dadurch strukturell besonders einfach.

Eine andere Ausgestaltung der einteiligen Buchse sieht vor, dass der Außenring zwei gegenüberliegende ebene Abschnitte aufweist, an die jeweils zwei hohlzylinderabschnittsförmige Randabschnitte anschließen. Besonders bevorzugt sind dabei Stege, beispielsweise insgesamt vier Stege, vorgesehen, die die hohlzylinderabschnittsförmigen Randabschnitte mit dem Innenring verbinden, wobei die ebenen Abschnitte mit keinem Steg unmittelbar verbunden sind. Dadurch ist die einteilige Buchse besonders einfach in eine Aussparung einer Tragstruktur eines Fahrzeugsitzes einsetzbar, wobei Form und Größe der Aussparung mit der äußeren Form und Größe der einteiligen Buchse korrespondiert.

Ein Fahrzeugsitz weist erfindungsgemäß eine Anzahl von erfindungsgemäßen Buchsen auf. Bei einem derartigen Fahrzeugsitz ist eine Führung eines Elementes, welches Bestandteil eines Verstellmechanismus ist, auf einfache Weise sehr leichtgängig und/oder sehr geräuscharm ermöglicht. Zudem ist ein Toleranzausgleich auf einfache Weise erzielbar. Der Verstellmechanismus des Fahrzeugsitzes kann beispielsweise zu einer Höheneinstellung oder zu einer Neigungsverstellung dienen.

Ausführungsbeispiele der Erfindung werden anhand von Zeichnungen näher erläutert. Dabei zeigen:
- Figur 1: eine erste Ausführungsform einer montierten erfindungsgemäßen Buchse in perspektivischer Ansicht,
- Figur 2: eine zugehörige perspektivischer Ansicht im nicht montierten Zustand,
- Figur 3a: eine zugehörige perspektivische Ansicht für einen ersten Montageschritt,
- Figur 3b: eine zugehörige frontale Ansicht für einen zweiten Montageschritt,
- Figur 3c: eine zugehörige frontale Ansicht für einen dritten Montageschritt,
- Figur 4: eine zugehörige erste frontale Ansicht für den montierten Zustand,
- Figur 5: eine zugehörige zweite frontale Ansicht für den montierten Zustand,
- Figur 6: eine zugehörige dritte frontale Ansicht für den montierten Zustand,
- Figur 7: eine zweite Ausführungsform einer erfindungsgemäßen Buchse in frontaler Ansicht und
- Figur 8: eine zugehörige perspektivische Ansicht.

Einander entsprechende Teile sind in allen Figuren mit den gleichen Bezugszeichen versehen.

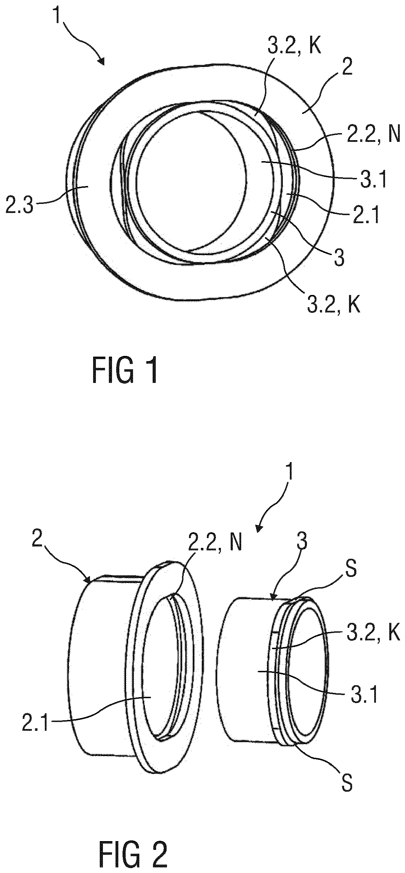

**Figur 1** zeigt eine erste Ausführungsform einer montierten Buchse 1 in perspektivischer Ansicht. Die Buchse 1 ist aus Kunststoff gebildet und zweiteilig ausgebildet. Die Buchse 1 dient bevorzugt zur Führung eines Elementes, welches Bestandteil eines Verstellmechanismus eines Fahrzeugsitzes, beispielsweise für eine Höheneinstellung oder eine Neigungsverstellung, ist. Die zweiteilige Buchse 1 umfasst eine äußere Führungsbuchse 2 und eine darin einsetzbare und hier eingesetzte innere Lagerbuchse 3.

Die Lagerbuchse 3 weist einen zylinderförmigen Grundkörper 3.1 und einen nach außen gerichteten Kragen 3.2 auf. Die Führungsbuchse 2 ist an ihrer Innenseite 2.1 langlochförmig ausgebildet und weist innenseitig eine umlaufende Nut 2.2 auf, deren Nutbreite N mit einer Kragenbreite K des Kragens 3.2 korrespondiert. Das geringste Innenmaß des Langlochs der Führungsbuchse 2, also die Langlochbreite, korrespondiert mit dem Außendurchmesser des zylinderförmigen Grundkörpers 3.1 der Lagerbuchse 3. Die Langlochbreite der Führungsbuchse 2 ist hier in der Vertikalen, also von oben nach unten, dargestellt. Die Langlochlänge der Führungsbuchse 2 erstreckt sich von links nach rechts. Die Lagerbuchse 3 ist innerhalb der Führungsbuchse 2 in einer Richtung verschieblich, nämlich von links nach rechts und umgekehrt, so dass auf einfache Weise ein Toleranzausgleich in einer Richtung quer zur Buchsenachse ermöglicht ist. Eine Führung eines hier nicht gezeigten Bauteils in der Buchse 1, beispielsweise eines Elementes, welches Bestandteil eines Verstellmechanismus eines Fahrzeugsitzes, beispielsweise für eine Höheneinstellung oder eine Neigungsverstellung, ist, ist dadurch auf einfache Weise sehr leichtgängig und/oder sehr geräuscharm ermöglicht. Die Führungsbuchse 2 weist einen äußeren Buchsenkragen 2.3 auf, dessen äußerer Rand mit der Form der langlochförmigen Innenseite 2.1 korrespondiert.

**Figur 2** zeigt eine zugehörige perspektivische Ansicht der Buchse 1 im nicht montierten Zustand, also mit von der Führungsbuchse 2 separierter Lagerbuchse 3. Die Lagerbuchse 3 mit dem zylinderförmigen Grundkörper 3.1 und dem Kragen 3.2 ist rechts dargestellt. Der Kragen 3.2 ist an zwei gegenüberliegenden Stellen S, die oben und unten gezeigt sind, kreisabschnittförmig unterbrochen. An dieser Stelle weist also die Lagerbuchse 3 einen Außendurchmesser, hier eine Höhe, auf, die mit einem geringsten Innendurchmesser der links dargestellten, innen langlochförmigen Führungsbuchse 2, hier ebenfalls einer Höhe, korrespondiert. Dadurch ist, zumindest in der dargestellten Positionierung, die Lagerbuchse 3 in die Führungsbuchse 2 einsteckbar.

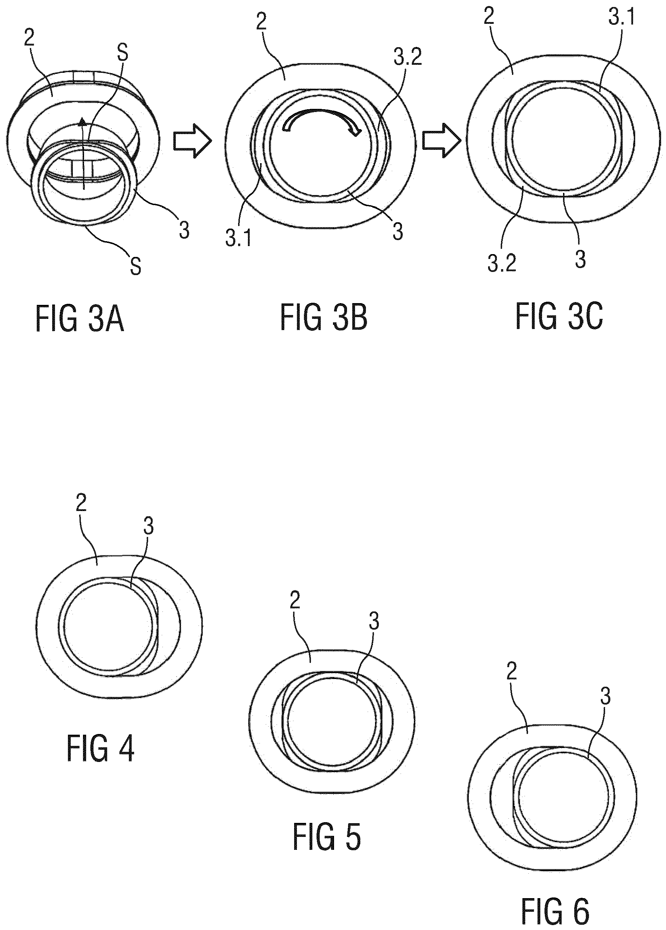

**Figur 3a** zeigt eine zugehörige perspektivische Ansicht für einen ersten Montageschritt. Dabei ist die Führungsbuchse 2 noch von der Lagerbuchse 3 separiert, aber bereits wie in Figur 2 beschrieben positioniert, so dass die Lagerbuchse 3 in der durch einen Pfeil angegebenen Richtung in die Führungsbuchse 2 einsteckbar ist. Die Lagerbuchse 3 ist also so positioniert, dass sich die beiden gegenüberliegenden Stellen S, an denen der Kragen 3.2 kreisabschnittförmig unterbrochen ist, oben und unten befinden.

**Figur 3b** zeigt eine zugehörige frontale Ansicht für einen zweiten Montageschritt. Dabei ist die Lagerbuchse 3 bereits in die Führungsbuchse 2 eingeschoben; und zwar bis in eine Tiefe, in der sich der hier nicht bezeichnete Kragen 3.2 in der gleichen Position wie die hier ebenfalls nicht bezeichnete Nut 2.2 befindet. In der durch einen Pfeil angegebenen Richtung ist nun die Lagerbuchse 3 innerhalb der Führungsbuchse 2 verdrehbar, so dass der Kragen 3.2 in die Nut 2.2 eingreift.

**Figur 3c** zeigt eine zugehörige frontale Ansicht für einen dritten Montageschritt, wobei die Lagerbuchse 3 innerhalb der Führungsbuchse 2 bereits um 90° gedreht ist, so dass der Kragen 3.2 in die Nut 2.2 eingreift.

Die Lagerbuchse 3 ist dadurch innerhalb der Führungsbuchse 2 von links nach rechts und umgekehrt verschiebbar, aber ohne Verdrehung nicht aus der Führungsbuchse 2 herausnehmbar.

**Figur 4** zeigt eine zugehörige erste frontale Ansicht für den montierten Zustand. Dabei ist die Lagerbuchse 3 innerhalb der Führungsbuchse 2 vollständig nach links verschoben.

**Figur 5** zeigt eine zugehörige zweite frontale Ansicht für den montierten Zustand. Dabei ist die Lagerbuchse 3 innerhalb der Führungsbuchse 2 in eine mittlere Lage verschoben.

**Figur 6** zeigt eine zugehörige dritte frontale Ansicht für den montierten Zustand. Dabei ist die Lagerbuchse 3 innerhalb der Führungsbuchse 2 vollständig nach rechts verschoben.

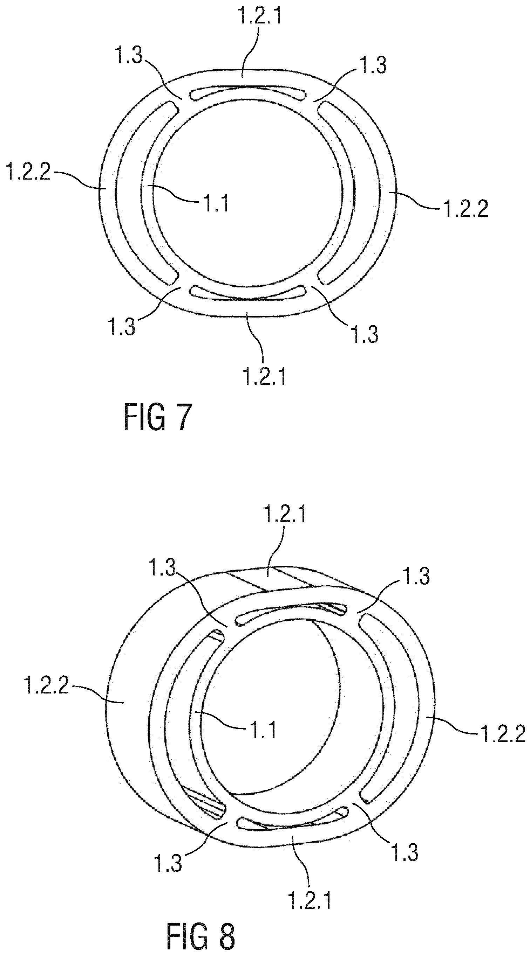

**Figuren 7 und 8** zeigen eine zweite Ausführungsform einer Buchse 1, wobei Figur 7 eine frontale Ansicht und Figur 8 eine zugehörige perspektivische Ansicht zeigen.

Die Buchse 1 ist einteilig und aus Kautschuk gebildet und dient bevorzugt zur Führung eines Elementes, welches Bestandteil eines Verstellmechanismus eines Fahrzeugsitzes ist, beispielsweise für eine Höheneinstellung oder eine Neigungsverstellung.

Diese Buchse 1 weist einen Innenring 1.1 und einen Außenring 1.2 auf, wobei Innenring 1.1 und Außenring 1.2 durch eine Anzahl von Stegen 1.3, insbesondere vier Stege 1.3, verbunden sind. Jeweils zwei benachbarte Stege 1.3 und daran anschließende Abschnitte von Innenring 1.1 und Außenring 1.2 umfassen einen Hohlraum.

Der äußere Umfang des Außenrings 1.2 hat die Form eines Langlochs, das heißt, zwei Abschnitte des Außenrings 1.2, hier ein unten und ein oben gezeigter ebener Abschnitt 1.2.1, sind und flach, also quaderförmig ausgebildet.

An die zwei gegenüberliegenden ebenen Abschnitte 1.2.1 schließen jeweils zwei hohlzylinderabschnittsförmige Randabschnitte 1.2.2 an. Jeweils zwei Stege 1.3 verbinden einen hohlzylinderabschnittsförmigen Randabschnitt 1.2.2 mit dem Innenring 1.1. Die ebenen Abschnitte 1.2.1 sind nicht unmittelbar mit einem der Stege 1.3 verbunden.

Der innere und der äußere Umfang des Innenrings 1.1 sind kreisrund, das heißt, der Innenring 1.1 ist hohlzylinderförmig.

Eine derartige Buchse erlaubt auf einfache Weise einen Toleranzausgleich quer zur Buchsenachse, da der Innenring 1.1 einfach in Richtung des Langlochs, in der Figur also nach rechts oder links, verschiebbar ist. Da die Buchse 1 aus Kautschuk oder aus einem anderen elastischen, flexiblen Material gebildet ist, ist dieser Toleranzausgleich auf einfache Weise und unter lediglich geringem Kraftaufwand bewirkbar, wobei der Toleranzausgleich im Wesentlichen durch Längenänderung und Deformation der Stege 1.3 erfolgt.

### Bezugszeichenliste

- 1: Buchse
- 1.1: Innenring
- 1.2: Außenring
- 1.2.1: ebener Abschnitt
- 1.2.2: hohlzylinderabschnittsförmiger Randabschnitt
- 1.3: Steg
- 2: Führungsbuchse
- 2.1: Innenseite
- 2.2: Nut
- 2.3: Buchsenkragen
- 3: Lagerbuchse
- 3.1: Grundkörper
- 3.2: Kragen

- N: Nutbreite
- K: Kragenbreite
- S: Stelle

## Patentansprüche

1. Buchse (1) **gekennzeichnet durch**
- eine langlochförmige Außenkontur,
- eine hülsenförmige Innenkontur und
- Mittel für einen Toleranzausgleich zwischen der hülsenförmigen Innenkontur und der langlochförmigen Außenkontur in einer Richtung quer zur Buchsenachse.

2. Buchse (1) nach Anspruch 1, ausgebildet zum Führen eines Verstellmechanismus eines Fahrzeugsitzes.

3. Buchse (1) nach Anspruch 1 oder 2,
**dadurch gekennzeichnet, dass** die Buchse (1) zweiteilig ist und eine Führungsbuchse (2) und eine Lagerbuchse (3) umfasst.

4. Buchse (1) nach Anspruch 3,
**dadurch gekennzeichnet, dass** die Führungsbuchse (2) an einer Innenseite (2.1) eine Nut (2.2) aufweist und dass die Lagerbuchse (3) einen Grundkörper (3.1) und einen Kragen (3.2) umfasst, welcher in der Nut (2.2) führbar ist.

5. Buchse (1) nach Anspruch 4,
**dadurch gekennzeichnet, dass** die Nut (2.2) umlaufend an der Innenseite (2.1) angeordnet ist.

6. Buchse (1) nach einem der Ansprüche 3 bis 5,
**dadurch gekennzeichnet, dass** die Führungsbuchse (2) einen Buchsenkragen (2.3) aufweist.

7. Buchse (1) nach einem der Ansprüche 3 bis 6,
**dadurch gekennzeichnet, dass** das geringste Innenmaß des Langlochs der Führungsbuchse (2) mit dem Außendurchmesser des Grundkörpers (3.1) der Lagerbuchse (3) korrespondiert.

8. Buchse (1) nach einem der Ansprüche 4 bis 7,
**dadurch gekennzeichnet, dass** der Kragen (3.2) der Lagerbuchse (3) an zwei gegenüberliegenden Stellen (S) kreisabschnittförmig unterbrochen ist.

9. Buchse (1) nach einem der Ansprüche 3 bis 8,
**dadurch gekennzeichnet, dass** die Führungsbuchse (2) und/oder die Lagerbuchse (3) aus Kunststoff gebildet sind.

10. Buchse (1) nach Anspruch 1 oder 2,
**dadurch gekennzeichnet, dass** die Buchse (1) einteilig ist.

11. Buchse (1) nach Anspruch 10,
**dadurch gekennzeichnet, dass** die Buchse (1) aus Kautschuk gebildet ist.

12. Buchse (1) nach Anspruch 10 oder 11,
**gekennzeichnet durch** einen Innenring (1.1) und einen Außenring (1.2), wobei Innenring (1.1) und Außenring (1.2) durch Stege (1.3) verbunden sind.

13. Buchse (1) nach Anspruch 12,
**dadurch gekennzeichnet, dass** der Innenring (1.1) hülsenförmig ist und die hülsenförmige Innenkontur bildet.

14. Buchse (1) nach Anspruch 12 oder 13,
**dadurch gekennzeichnet, dass** der Außenring (1.2) zwei gegenüberliegende ebene Abschnitte (1.2.1) aufweist, an die jeweils zwei hohlzylinderabschnittsförmige Randabschnitte (1.2.2) anschließen.

15. Fahrzeugsitz,
**gekennzeichnet durch** eine Anzahl von Buchsen (1) gemäß einem der vorhergehenden Ansprüche.
